# EUROPEAN PATENT SPECIFICATION

(11) **EP 3 508 912 B1**
(45) Date of publication and mention of the grant of the patent: **19.03.2025**
(21) Application number: 17846209.9
(22) Date of filing: 22.08.2017
(51) Int. Cl.: G02B 27/02, G09F 19/18, G03B 21/625, G03B 35/24

(54) **DISPLAY DEVICE**
ANZEIGEVORRICHTUNG
DISPOSITIF D'AFFICHAGE

(30) Priority: 31.08.2016 JP 2016170038
(43) Date of publication of application: 10.07.2019
(73) Proprietor: National Institute of Advanced Industrial Science and Technology, Tokyo 100-8921 (JP)
(72) Inventor: OHYAMA Junji, Tsukuba-shi Ibaraki 305-8566 (JP)
(74) Representative: Rings, Rolf
(86) International application number: PCT/JP2017/029917
(87) International publication number: WO 2018/043204

(56) References cited:
- WO-A1-2015/151893
- JP-A- 2001 272 934
- JP-A- 2016 001 211
- JP-U- H0 741 547
- US-A- 3 552 822
- US-A- 6 076 933
- US-A1- 2013 033 650
- ANONYMOUS: "Dono Hoko karamo Gazo ga Jibun ni Muite iru Yoni Mieru Display o Kaihatsu", 9 May 2016 (2016-05-09), XP055592718, Retrieved from the Internet <URL:http://www.aist.go.jp/aist_j/press_release/pr2016/pr20160509/pr20160509.html>

## Description

### TECHNICAL FIELD

The present invention relates to techniques for a display device for displaying images.

### BACKGROUND ART

In public spaces such as roads and plazas, public facilities such as station premises, event venues, stadiums, and commercial facilities such as supermarkets and malls, it is preferable that many people who are at various positions with respect to a display device can see the display image for easy viewing. For example, JP 2001 272934 A discloses a display including a cylindrical lenticular lens centering on a light source and transparent light control mean, which forms a transparent image contracted in the horizontal direction for each lens constituting the lenticular lens in this transparent light control means.

In US 2013/033650 Al, a display system for projecting changeable electronic content, such as video or digital still images, onto multiple surfaces is disclosed, in which the light of the projector is redirected by means of a reflector onto a display surface including a turning film and a rear projection film (RPF) attached on the two sides of a support substrate, respectively. The reflector is, for example, a conical reflector so that the display surface can have a curved cylindrical form, e.g. a full 360° shape.

In US 6,076,933 A, a single-layer or multi-layer light filter is disclosed, having an array of a plurality of light transmissive beads, which can be optimized in view of the control of the optical properties for providing an improved image on a display screen. The plurality of beads of this array of beads are arranged in a linear manner on a binder layer, on which a light transmissive material is attached.

### SUMMARY OF INVENTION

### PROBLEM TO BE SOLVED BY THE INVENTION

However, in the prior art like JP 2001 272934 A, it is necessary to print prerecorded transparent images on the inner surface of the lenticular lens. For this reason, in order to change the display image, it is necessary to replace or reprint, and the degree of freedom of changing the images to be displayed is low.

Hence, it is an object of the present invention to provide, for example, a display device with improved degree of freedom in changing images to be displayed.

### MEANS FOR SOLVING THE PROBLEM

This problem is solved by means of a display device according to claim 1. Preferred forms of realization are defined in dependent claims.

To solve the above problem, the invention according to claim 1 is a display device comprising: a plurality of refraction means for refracting light and magnifying an image, each refraction means comprising a portion having a circular-shaped cross-section, and the plurality of the refraction means being a plurality of lenses; an arrangement support means for arranging the plurality of the refraction means in a circular shape, an elliptical shape, or a shape similar thereto and supporting the plurality of the refraction means in a convex shape with respect to a first side associated with a viewpoint side; an image display means disposed on a second side of the plurality of the refraction means opposite the first side, the image display means for displaying out an image seen from the first side, on a back surface of a projection surface onto which projection light from an image projection means is projected, the image display means being a transmission type screen, the image projection means being a projector; wherein the image display means is disposed on a surface of the refraction means on the second side opposite the first side in a form of the transmission type screen, and wherein a line connecting a first center of the image display means and a second center of the refraction means is in a direction normal to the convex shape of the arrangement support means.

The invention according to claim 2 is the display device according to claim 1, in which the projection light from the image projection means is projected onto the projection surface of the image display means from a plurality of directions.

The invention according to claim 3 is the display device according to any one of claims 1 or 2, further including: the image projection means.

The invention according to claim 4 is the display device according to any one of claims 1 to 3, further including: a reflection means for reflecting the projection light from the image projection means and projecting the reflected projection light onto the projection surface of the image display means.

### EFFECT OF THE INVENTION

According to the present invention, since the image displayed out on the back surface of the projection surface on which the projection light from the image projection means is projected can be seen through the refraction means, it is possible to easily change the display image to be displayed on the display device, by changing the projection light output from the image projection means,

### BRIEF DESCRIPTION OF DRAWINGS

FIG. 1 is a schematic diagram schematically showing an example configuration of a display device according to an embodiment.
FIG. 2 is a schematic diagram showing an example of the refraction means in FIG. 1.
FIG. 3A is a schematic diagram showing an example in which the refraction means in FIG. 1 is stereoscopically arranged.
FIG. 3B is a schematic diagram showing an example in which the refraction means in FIG. 1 is stereoscopically arranged.
FIG. 4A is a schematic diagram showing a modified example of shapes of the refraction means.
FIG. 4B is a schematic diagram showing a modified example of shapes of the refraction means.
FIG. 4C is a schematic diagram showing a modified example of shapes of the refraction means.
FIG. 4D is a schematic diagram showing a modified example of shapes of the refraction means.
FIG. 4E is a schematic diagram showing a modified example of shapes of the refraction means.
FIG. 4F is a schematic diagram showing a modified example of shapes of the refraction means.
FIG. 4G is a schematic diagram showing a modified example of shapes of the refraction means.
FIG. 5A is a schematic diagram showing an example of arrangements of the refraction means.
FIG. 5B is a schematic diagram showing an example of arrangements of the refraction means.
FIG. 5C is a schematic diagram showing an example of arrangements of the refraction means.
FIG. 5D is a schematic diagram showing an example of arrangements of the refraction means.
FIG. 6A is a schematic diagram showing an example of arrangements of the refraction means.
FIG. 6B is a schematic diagram showing an example of arrangements of the refraction means.
FIG. 7A is a schematic diagram showing an example of arrangements of the refraction means.
FIG. 7B is a schematic diagram showing an example of arrangements of the refraction means.
FIG. 7C is a schematic diagram showing an example of arrangements of the refraction means.
FIG. 8A is a schematic diagram showing an example of arrangements of the refraction means.
FIG. 8B is a schematic diagram showing an example of arrangements of the refraction means.
FIG. 9A is a schematic diagram showing an example of the image display means.
FIG. 9B is a schematic diagram showing an example of the image display means.
FIG. 10A is a schematic diagram showing a modified example of the image display means not part of the invention.
FIG. 10B is a schematic diagram showing a modified example of the image display means not part of the invention.
FIG. 11A is a schematic diagram showing a modified example of the image display means not part of the invention.
FIG. 11B is a schematic diagram showing a modified example of the image display means not part of the invention.
FIG. 11C is a schematic diagram showing a modified example of the image display means not part of the invention.
FIG. 12A is a schematic diagram showing a modified example of the image display means not part of the invention.
FIG. 12B is a schematic diagram showing a modified example of the image display means not part of the invention.
FIG. 13 is a block diagram schematically showing an example configuration of a control device.
FIG. 14 is a schematic diagram showing a modified example of the image display means not part of the invention.
FIG. 15 is a schematic diagram showing an example of light path in the refraction means.
FIG. 16A is a schematic diagram showing an example of reflection in a lens having a single convex structure.
FIG. 16B is a schematic diagram showing an example of reflection in a lens having a single convex structure.
FIG. 17 is a schematic diagram showing an example of relationship between viewpoint and image of each refraction means.
FIG. 18 is a schematic diagram showing an example of relationship between parallax and image.
FIG. 19 is a schematic diagram showing an example of arrangements of ball lens in a display device of the first example.
FIG. 20A is a schematic diagram showing an example of displays in the display device of the first example.
FIG. 20B is a schematic diagram showing an example of displays in the display device of the first example.
FIG. 21 is a schematic diagram showing a modified example of the display device of the first example.
FIG. 22 is a schematic diagram showing an example of arrangements of round column lens in a display device of the second example.
FIG. 23 is a schematic diagram showing an example of image projection means in a display device of the second example.
FIG. 24 is a schematic diagram showing an example of reflection means in a display device.
FIG. 25 is a schematic diagram showing a modified example of the display device.

### DESCRIPTION OF EMBODIMENTS

An embodiment of the present invention will be described using the drawings.

### [1. Configuration and Functions of Display Device]

### (1.1 Outline of Configuration and Functions of Display Device)

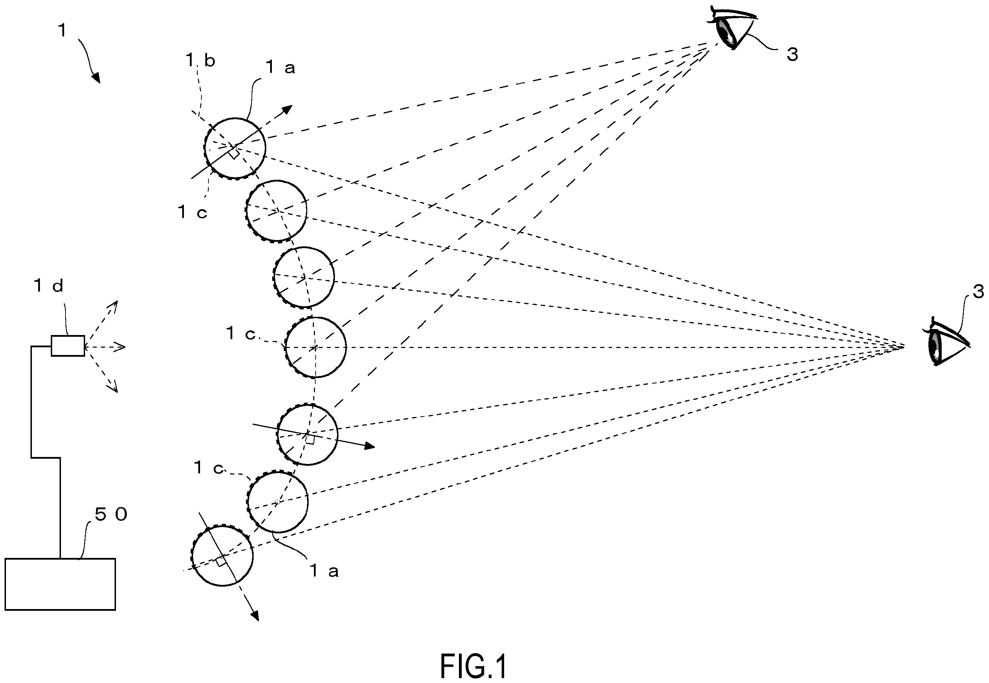

First, an outline of a configuration and functions of a display device will be described using Fig. 1 to Fig. 3B.

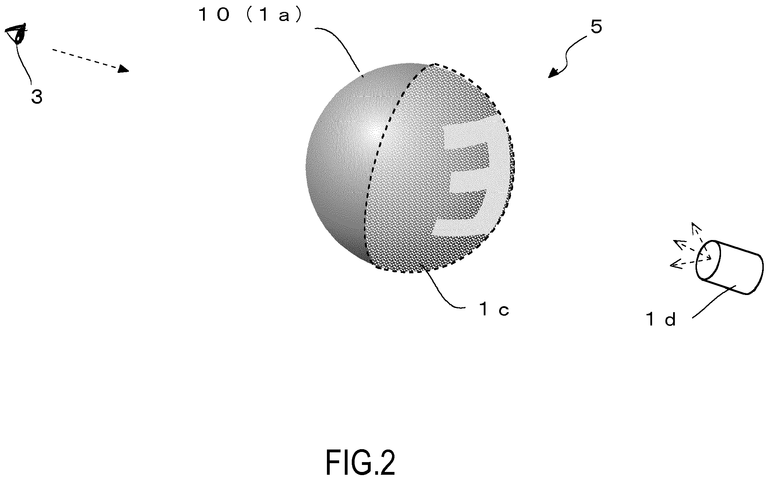

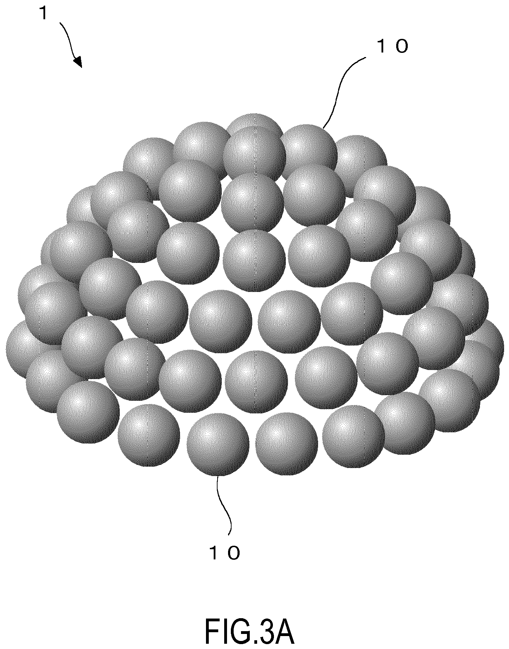

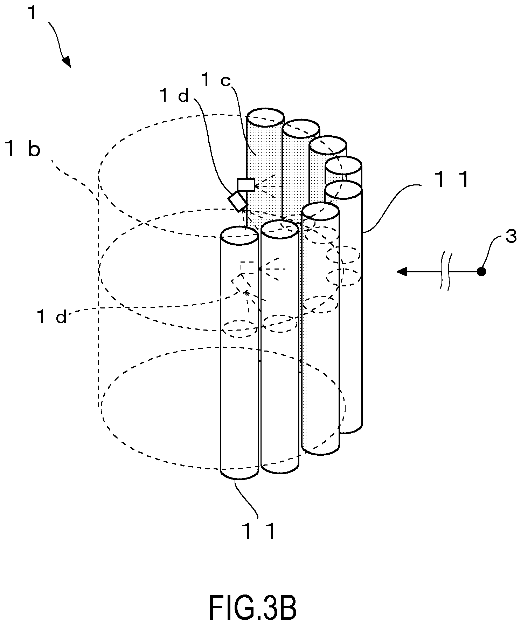

FIG. 1 is a schematic diagram schematically showing an example configuration of a display device according to an embodiment. FIG. 2 is a schematic diagram showing an example of the refraction means in FIG. 1. FIG 3A and FIG 3B are a schematic diagram showing an example in which the refraction means in FIG. 1 is stereoscopically arranged.

As shown in FIG. 1, the display device 1 includes a plurality of refraction means 1a, an arrangement support means 1b, an image display means 1c, and an image projection means 1d. The refraction means 1a refracts light and magnifies an image. The arrangement support means 1b arranges and supports each refraction means 1a. The image display means 1c displays out the image by projection light. The image projection means 1d projects the projection light to the image display means 1c.

The refraction means 1a has, for example, a circular-shaped cross section. An example of the refraction means 1a includes, for example, a spherical ball lens as shown in Fig. 2. Furthermore, an example of the refraction means 1a includes lenses of round column shape, ellipsoid, cone, etc. with a circular-shaped cross section. The circular shape is a circle-shape having a substantially constant curvature.

The arrangement support means 1b arranges each refraction means 1a in a convex shape with respect to a viewpoint 3 side as shown in FIG. 1. Stereoscopically, for example, as shown in FIG. 3A, each ball lens 10 (an example of the refraction means 1a) is arranged on a curved surface having a spherical surface shape. As shown in FIG. 3B, in the case that the refraction means 1a is a round column lens 11, each round column lens 11 in the same direction is arranged on a curved surface of a cylindrical surface-form. Incidentally, in case of lenses having a conical shape or a truncated conical shape, lenses are arranged on a curved surface of a truncated conical side face. Incidentally, the viewpoint 3 is outside the display device 1.

Herein, an example of the convex shape of the arrangement support means 1b includes a spherical surface shape having a substantially constant curvature and a cylindrical surface shape having a circular-shaped cross section in a plane perpendicular to the axis of the cylinder. Moreover, the spherical surface shape is a curved surface forming a part of a spherical surface such as a whole spherical surface, a semispherical surface, etc., and is a curved surface having a substantially constant curvature. The cylindrical surface shape is a curved surface forming a part of a cylindrical surface such as a full cylinder, a half cylinder, a 1/4 cylinder, etc., and the cross-sectional shape by a plane perpendicular to the axial direction of the cylinder is a circle whose curvature is substantially constant. Incidentally, it may be a curved surface shape etc. whose curvature is not necessarily constant.

Incidentally, as shown in FIG. 3B, in case of the viewpoint 3 (the viewpoint direction of the viewpoint 3 is parallel to the bottom surface of the round column lens 11), the cross section of the round column lens 11 has a circular shape and the shape of the cross section of the round column lens 11 is the same.

As shown in FIG 3A and FIG 3B, FIG.1 is also a sectional view describing each refraction means 1a arranged stereoscopically in a certain cross section from a certain viewpoint 3. Moreover, FIG. 1 is also a sectional view describing, in a certain section, a ball lens 10 arranged on a curved surface having a cylindrical surface shape which is one example of each refraction means 1a arranged stereoscopically.

The image display means 1c, as shown in FIG. 1, is set in an opposite side to the viewpoint 3 side with respect to the refraction means 1a. For example, the image display means 1c is provided on the surface of the opposite side of the refraction means 1a.

The image display means 1c is a screen that displays out an image by projection light projected from the image projection means 1d. The projection light projected from the image projection means 1d is projected on the projection surface of the screen, and a projection image is formed. The image display means 1c is a transmission type screen that displays out a mirror image of the projection image as seen from the back surface side, on the back surface of the screen surface.

Herein, the projection light output (or projected) from the image projection means 1d is an image formed on the projection surface by being projected on the projection surface of the image display means 1c. The projection image may vary depending on the shape of the projection surface of the image display means 1c, the projection light of the image projection means 1d and the positional relationship (distance, direction, etc.) between the two means.

As shown in FIG. 2, for example, by applying the surface treatment to the hemispherical surface of the ball lens 10, the image display means 1c which is a transmission type screen is formed therein. In the case that the transmission type screen as shown in FIG. 2 is formed on the hemispherical surface of the ball lens 10, the image display means 1c displays out the image which can be seen from the viewpoint 3 side, on the back surface of the projection surface on which the projection light is projected.

As shown in FIG. 1, the image display means 1c is set in the opposite side to the viewpoint 3 side with respect to the refraction means 1a. That is, the image display means 1c is provided inside the display device 1 with respect to the viewpoint 3 outside the display device 1. As shown in FIG. 2, by the projection light projected from the image projection means 1d onto the image display means 1c, a formed-image 5 (mirror image of character "E" in FIG. 2) is formed on the surface of the refraction means 1a on the opposite side to the viewpoint 3 side with respect to the refraction means 1a such as the ball lens 10. In the case that the image display means 1c is provided on the surface of the refraction means in the opposite side by surface treatment, etc., the image displayed out on the back side of the projection plane of the image projection means 1c (the image seen in the normal image of the letter "E" as seen from the viewpoint 3 side) becomes the formed-image 5. In this case, the projection image of the projection surface of the image display means 1c is also the formed-image 5 (an image seen as a mirror image of the letter "E" when seeing from the opposite side from the viewpoint 3) .

As shown in FIG. 1, the image display means 1c is provided so that the part to be the center of the formed-image 5 faces in the normal line direction of the convex shape formed by the arrangement support means 1b. That is, each of the refraction means 1a is supported by the arrangement support means 1b so that the central part of the image display means 1c (the part to be the center of the formed-image) faces in the normal direction of the convex shape. The line connecting the center part of the image display means 1c and the central part of the refraction means 1a is a vertical direction with respect to the convex shaped surface of the arrangement support means 1b.

The light of the formed-image 5 formed on the surface of the refraction means 1a on the opposite side to the viewing point 3 side passes through the inside of the refraction means 1a, refracts as it exits from the refraction means 1a, and reaches the viewpoint 3. A part of the formed-image 5 corresponding to the direction of the viewpoint 3 (partial formed-image) is enlarged by the refraction means 1a.

The image projection means 1d is connected to the control device 50 and is controlled by the control device 50. The image projection means 1d outputs (or projects) the projection light directed toward the refraction means 1 from the opposite side to the viewpoint 3 with respect to the refraction means 1a. The projection image is formed on the projection surface of the image display means 1c by the projection light output from the image projection means 1d. The light of the projection image passes through the image display means 1c and the image is displayed out on the back side of the projection surface. The formed-image is formed on the surface of the refraction means 1a by the light of the image displayed out.

The control device 50 generates image data of the projection image formed on the projection surface of the image display means 1c by the projection light output from the image projection means 1d. The control device 50 controls the image projection means 1d so as to output the projection light such that the projection image is formed on the projection surface of the image display means 1c, from the image projection means 1d.

Moreover, in the case that the projection image of the projection surface of each image display means 1c forms the same or similar formed-image 5 in all the refraction means 1a by the projection light from the image projection means 1d, the same or similar images are displayed on the display device 1, even if viewpoint 3 is changed.

Herein, an example of each of the adjacent refraction means 1a in the refraction means 1a arranged on a convex-shaped curved surface includes the other refraction means 1a which is the nearest in each direction centered on the refraction means 1a and the other refraction means 1a which is the second nearest.

### (1.2 Configuration and Functions of Refraction Means)

Next, the configuration and functions of the refraction means 1a will be described in detail.

The refraction means 1a is a lens made of a material which refracts and transmits light such as glass, plastic, etc.
Since the color of the refraction means 1a is only required to transmit light, it is not limited to being transparent but may be colored glass, etc.

At least a part of the refraction means 1a has a circular-shaped cross section. The solid three-dimensional shape of the refraction means 1a is a sphere-shape, a column, an ellipsoid, a cone-shape, etc. For example, an example of the refraction means 1a includes a ball lens, a round column lens, etc. Furthermore, the solid three-dimensional shape of the refraction means 1a may be a shape in which a column bulges like a barrel, a shape in which a column is constricted like a Japanese drum *Tsudzumi,* or a shape in which a vertex side of a cone-shape is cut.

Herein, the circular shape as the shape of the cross section of the refraction means 1a is not limited to a perfect circle and may be somewhat distorted. For example, as viewed from the viewpoint 3, the shape of the image displayed by the display device 1 may be deformed or distorted from the perfect circle to the extent that it can be recognized as the image in the case of a perfect circle as the entire display device 1.

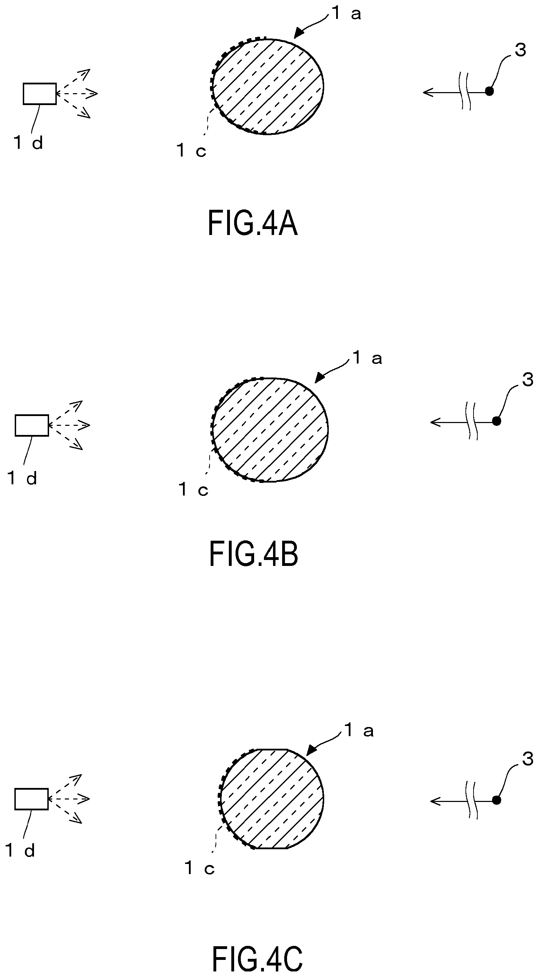

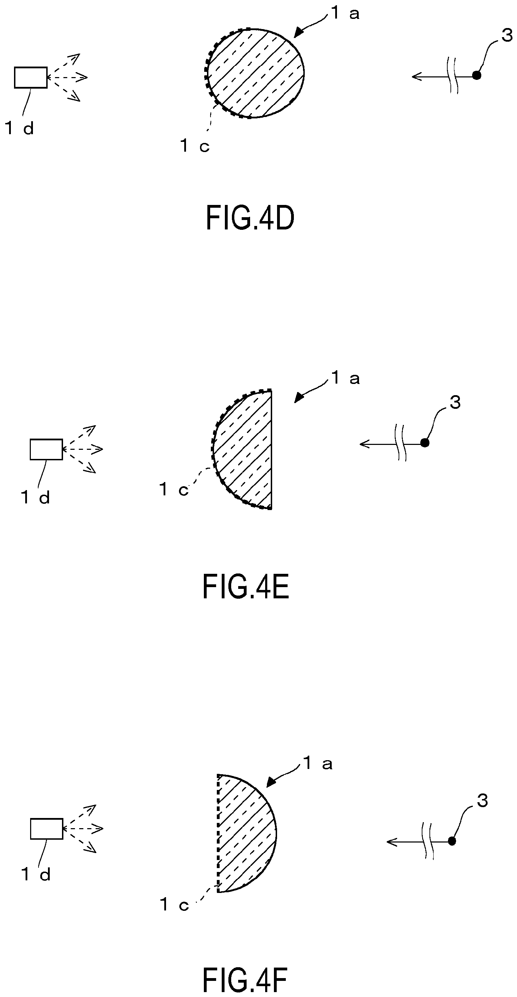

Furthermore, as shown in FIGS. 4A to 4D, the circular shape of the cross section of the refraction means 1a may be a biconvex structure such as a somewhat ellipse-shape, to the extent that the influence of reflection inside the refraction means (internal reflection) is not concerned with the way of the image displayed by the display device 1 looks from the viewpoint 3. For example, as shown in FIG. 4A, the refraction means 1a may be an ellipsoid, the axis of the ellipsoid may face the viewpoint 3, and the circular shape of the section of the refraction means 1a may be somewhat elliptical. In addition, as shown in FIG. 4B, the refraction means 1a may be a lens having a shape in which a thin disk is sandwiched between two hemispheres, and the circular shape of the cross section of the refraction means 1a may sandwich the rectangle between the semicircles. As shown in FIG. 4C, a part of the ball lens is cut, and the circular shape of the cross section of the refraction means 1a may be a shape in which a part of a circle is cut away. As shown in FIG. 4D, with respect to a viewpoint 3 side, the curvature of the curved surface of the refraction means 1a on the near side and the curved surface of the refraction means 1a on the far side may be somewhat different.

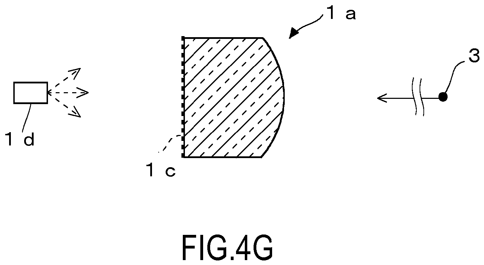

Incidentally, as shown in FIGS. 4E and 4G, the refraction means 1a may be a lens having a single convex structure (for example, a hemispherical lens, a semi-cylindrical lens, or some of these lenses) . In this case, the cross-sectional shape of the refraction means 1a is, for example, a semicircle. Since the refraction means 1a may have a function of magnifying an image, it may be a lens having a single convex and single concave structure.

Herein, an example of viewpoint 3 includes human eyes, cameras, eyes of robots, etc. In addition, the distance between the display device 1 and the viewpoint 3 is also various, and may be seen approaching or leaving the display device 1. The viewpoint direction of the viewpoint 3 is also various, and the refraction means 1a may be seen.

### (1. 3 Configuration and Functions of Arrangement Support Means)

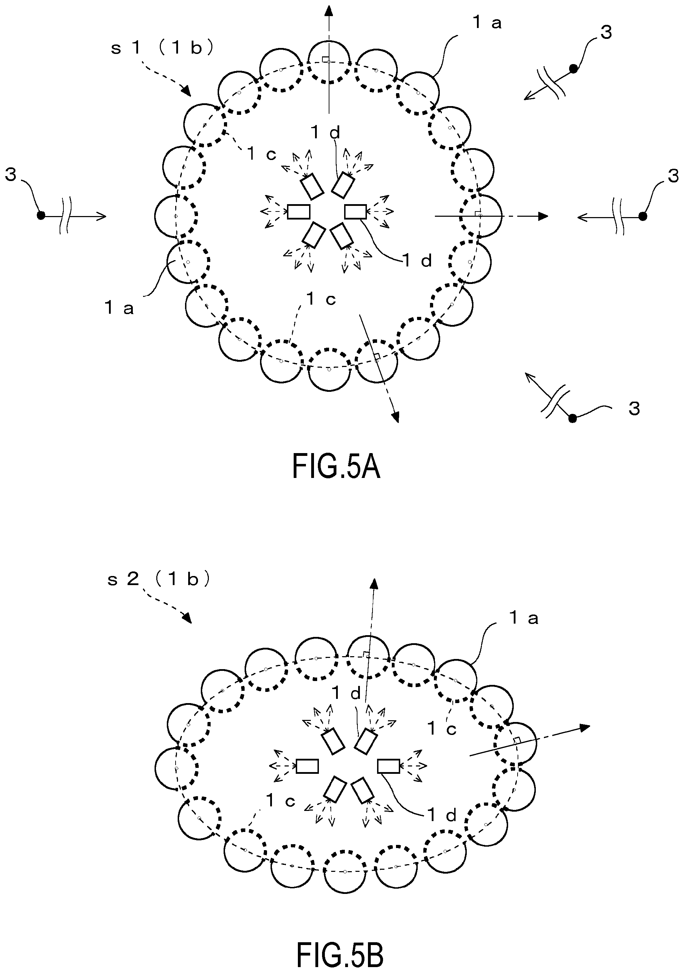

Next, the configuration and functions of the arrangement support means 1b will be described in detail using FIGS. 5A to 8 B.

The arrangement support means 1b has a material which can define the arrangement by connecting the refraction means 1a such as a ball lens of resin, clay, etc.

Incidentally, the refraction means 1a flexibly coupled with adhesive may be placed on a support base having a convex surface.

In this case, the arrangement support means 1b is adhesive and a supporting base. In addition, the arrangement support means 1b may support the refraction means 1a of attaching the image display means 1c by embedding it in about half a plastic material. In the case where the shape of the refraction means 1a is a rod-like shape such as a column, an ellipsoid, or a cone-shape, the arrangement support means 1b may be a support base into which the refraction means 1a is inserted and fixed.

Next, an arrangement example of the refraction means 1a will be described.

The arrangement support means 1b arranges the plurality of refraction means 1a in a convex shape with respect to the viewpoint 3 side. For example, as shown in FIG. 5A, the refraction means 1a may be arranged in a circular shape s1. In this case, the three-dimensional arrangement of each refraction means 1a is a sphere-shape, a hemisphere-shape, a round column-shape, an ellipsoid, etc. In the case of a hemisphere-shape, a round column-shape and an ellipsoid, the circular shape s1 is arranged at a certain cutting plane.

As shown in FIG. 5A, the direction of the formed-image formed on the surface of the refraction means 1a by the image display means 1c is the vertical direction with respect to the arrangement shape (circular shape s1) of the refraction means 1a. That is, each of the refraction means 1a is arranged so that the part to be the center of the formed-image (for example, the central part of the image display means 1c) can face in the normal direction of the convex shape.

In addition, as shown in FIG. 5B, the refraction means 1a may be arranged in an elliptical shape s2. In this case, the three-dimensional arrangement of each refraction means 1a is, for example, an elliptic column-shape, an ellipsoid, etc. It is an arrangement of elliptical shape s2 at a certain cutting plane of an elliptic column-shape or an ellipsoid. As shown in FIG. 5B, the direction of the formed-image formed on the surface of the refraction means 1a by the image display means 1c is the vertical direction with respect to the arrangement shape (elliptical shape s2) of the refraction means 1a. That is, each of the refraction means 1a is arranged so that the part to be the center of the formed-image (for example, the central part of the image display means 1c) can face in the normal direction of the convex shape.

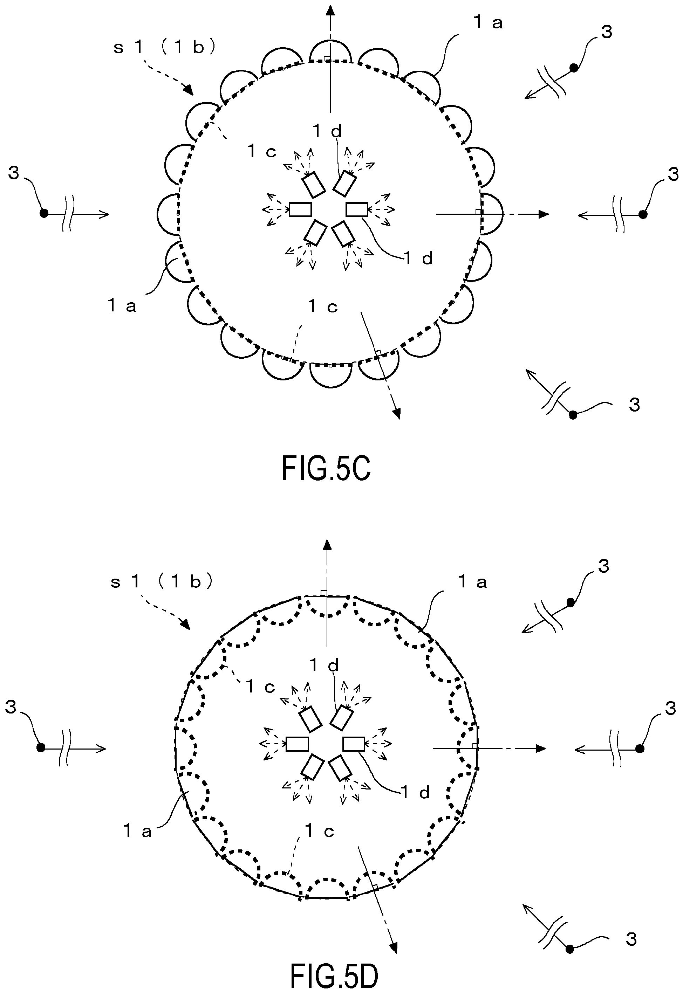

As shown in FIGS. 5C and 5D, the refraction means 1a having a single convex structure (for example, hemisphere or semicircular column) may be arranged in the circular shape s1.

As shown in FIG. 5C, the convex surfaces of the refraction means 1a may be arranged so as to face the viewpoint 3 side. In this case, the image display means 1c may be formed on the plane of the refraction means 1a. As shown in FIG. 5D, it may be arranged so as to face the center side of the refraction means 1a. In this case, the image display means 1c may be formed on the convex surface of the refraction means 1a.

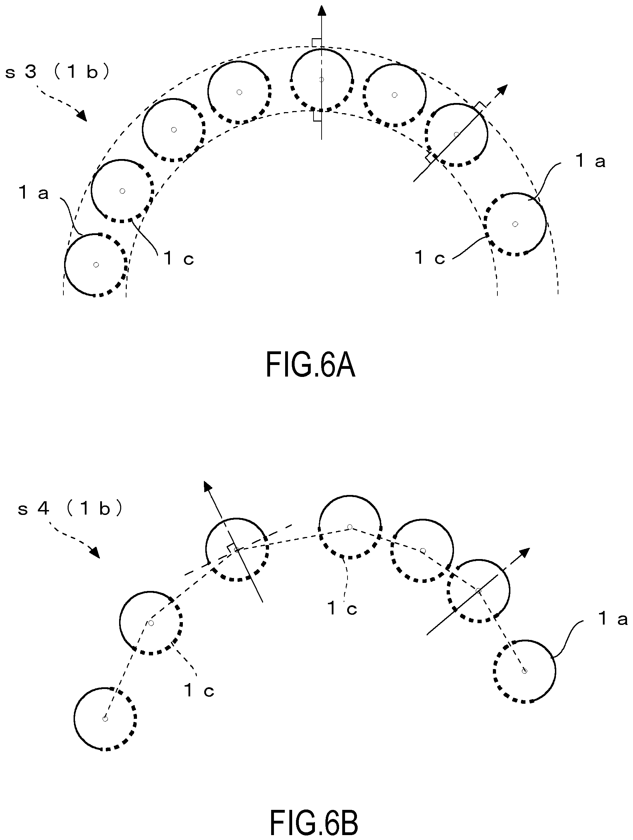

In addition, as shown in FIG. 6A, the convex shape is not limited to the shape passing through the center of each refraction means 1a, but it may be set to a shape s3 which is inscribed or circumscribes each of the refraction means 1a. As shown in FIG. 6A, the direction of the formed-image formed on the surface of the refraction means 1a by the image display means 1c is the vertical direction with respect to the shape s3 inscribed or circumscribed.

In addition, the convex shape (shape s3) may not be a closed shape as shown in FIGS. 5A and 5B but may be an open shape as shown in FIG. 6A. That is, the convex shape may not be a closed convex shape such as a closed circular shape or a closed elliptical shape, but may be a part shape of these.

In addition, as shown in FIG. 6B, the convex shape may be a polygon s4 formed by connecting the vicinity of the center of each refraction means 1a with a straight line. That is, the three-dimensional arrangement of the refraction means 1a may be a convex polyhedron whose vertex is the vicinity of the center of each refraction means 1a.

As shown in FIG. 6B, the direction of the formed-image formed on the surface of the refraction means 1a by the image display means 1c is the vertical direction with respect to one face coming in contact with the polygon at the vertex of the polygon.

In addition, as shown in FIG. 6B, each of the refraction means 1a may not be arranged at regular intervals.

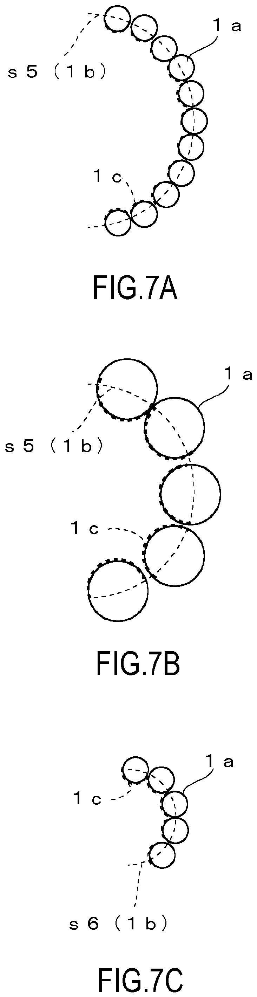

In addition, as shown in FIG. 7A, each of the small refraction means 1a (for example, a ball lens having a small diameter) may be arranged in the same convex shape s5 by the arrangement support means 1b, and as shown in FIG. 7B, each of the large refraction means 1a (for example, a ball lens having a large diameter) may be arranged. As shown in FIG. 7A, in the case of the small refraction means 1a, the resolution of the image displayed by the display device 1 is increased.

In addition, the size of the convex shape in which the refraction means 1a is arranged by the arrangement support means 1b depends on the size of the display device 1. For example, as shown in FIG. 7C, when the size of the display device 1 becomes small, the curvature of the convex shape s6 becomes large. FIG. 7C shows an example in which the radius of the arrangement support means 1b is small using individual refraction means 1a of the same size as in FIG. 7A. In this case, the image displayed on the display device 1 in FIG. 7C becomes the same image, although the size of the displayed image become small in matching the size of the display device 1 as compared with FIG. 7A.

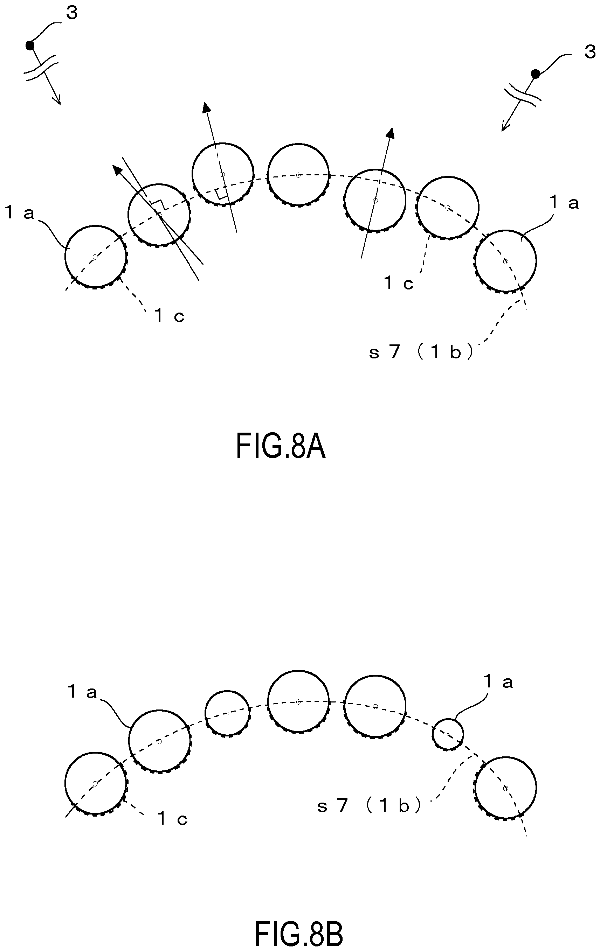

In addition, as shown in FIG. 8A, all of the refraction means 1a may not necessarily be arranged on the line of the convex shape s7 formed by the arrangement support means 1b. For example, some of the refraction means 1a may be arranged on the viewpoint 3 side (outside the display device 1) or may be installed on the inside opposite to the viewpoint 3 side (the inside of the display device 1), rather than the convex shape s7 on the design of the display device 1.

In these cases, in the image of the display device 1, the part of the image participated by some of the refraction means 1a may not be the shape of the design that was previously planned before the creation. In this case, in the entire image displayed by the display device 1, the part of the image participated by some of the image display means 1c become an image shifted.

In addition, as shown in FIG. 8A, the direction of the formed-image formed on the surface of the refraction means 1a by all the image display means 1c may not be necessarily accurately perpendicular to the convex shape s7 in the design of the display device 1. The part of the image involving participated by some of the image display means 1c as described above may not be in accordance with the direction not be the shape of the design that was previously planned before the creation. In this case, in the entire image displayed by the display device 1, the part of the image participated by some of the image display means 1c become an image shifted.

Incidentally, that the part to be the center of the formed-image can face in the normal direction of the convex shape may mean that the direction of the formed-image formed on the surface of the refraction means 1a by the image display means 1c is not necessarily perpendicular precisely to the convex shape s7 on the design of the display device 1, and that the direction of the formed-image formed on the surface of the refraction means 1a by the image display means 1c may be deviated from the vertical, to the extent that it can be recognized, in the whole of the display device 1, as an image in the case where the direction of the formed-image formed on the surface of the refraction means 1a by each image display means 1c is accurately vertical.

In addition, as shown in FIG. 8B, the sizes of the refraction means 1a may be different from each other. For example, as viewed from the viewpoint 3, the sizes of the refraction means 1a may be different from each other to the extent that it can be recognized, in the whole of the display device 1, as an image in the case where the sizes of the refraction means 1a are the same. Incidentally, the cross-sectional area of some of the refraction means 1a may be reduced depending on what cross section to grasp the display device 1 in which the ball lens 10 as shown in FIG. 3A is three-dimensionally arranged.

In addition, the refractive index of the refraction means 1a may be different from each other. For example, the refractive indices of each refraction means 1a may be different from each other to the extent that it can be recognized, in the whole of the display device 1, as an image in the case where the refractive indexes of each refraction means 1a are the same, as viewed from the viewpoint 3.

Incidentally, when each of the refraction means 1a is arranged so that the part to be the center of the image can face in the normal direction of the convex shape, the cross-sectional shape of each refraction means 1a from the viewpoint 3 have the same shape. That is, in particular, in the case that the refraction means 1a is a solid having directionality such as a c round column-shape, an ellipsoid, a cone-shape, etc., each refraction means 1a is arranged such that the directions of each refraction means 1a are substantially aligned. Incidentally, it is sufficient if the formed-image 5 can be recognized in the entire display device 1 by viewing each formed-image 5 from the viewpoint 3, although it is not necessary that the cross-sectional shapes of each refraction means 1a are exactly the same.

In addition, the convex shape in which the refraction means 1a is arranged by the arrangement support means 1b may be a shape formed by joining a spherical surface shape and a cylindrical surface shape. For example, the entire shape of the display device 1 may be a shape in which the cylindrical surface is sandwiched by two hemispherical surfaces. As described above, the three-dimensional arrangement of each refraction means 1a may be a combination of a spherical surface, a semi-spherical surface, a cylindrical surface, an ellipsoidal surface, etc.

Incidentally, the entire shape of the display device 1 may be a combination of a plurality of convex shapes. In this case, the joint portion between the convex shape and the convex shape may not necessarily have a convex shape. For example, convex shapes may be formed in four directions like four leaves.

In addition, regarding the arrangement of the refraction means 1a, the spherical shape may be similar to a spherical surface, as long as it may be convex shape. Regarding the arrangement of the refraction means 1a as well, the cylindrical surface shape may be similar to the cylindrical surface, such as a shape in which a cylindrical surface bulges like a barrel, a shape in which a cylindrical surface is constricted like a Japanese drum *Tsudzumi,* or a shape in which a vertex side of a cone-shape is cut.

### (1.4 Configuration and Functions of Image Display Means)

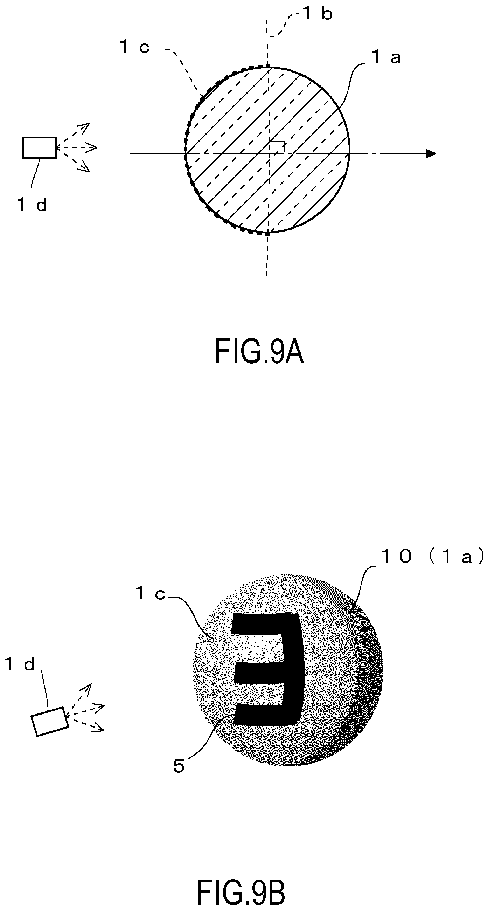

Next, the configuration and functions of the image display means 1c will be described in detail using FIGS. 9A to 10.

The image display means 1c has, for example, a function of a transmission type screen. The image display means 1c is set in by applying a process or a surface treatment of making the surface opposite to the viewpoint 3 side of the refraction means 1a translucent, sticking a translucent sheet (for example, a film of matte polyester, etc.) on the surface opposite to the viewpoint 3 side of the refraction means 1a, or apply translucent paint. The surface on the opposite side of the refraction means 1a is surface-treated with grinding sand, chemicals or the like, and then by the occurrence of fine irregularities it become like a ground glass or a cloudy glass.

For example, as shown in FIG. 2, an image display means 1c having hemisphere shape is formed by applying surface treatment to the hemisphere surface of the ball lens 10.

The image display means 1c may be a translucent screen such as vinyl or acrylic resin, glass or the like.

The image display means 1c may have a function of displaying out an image on the back surface of the projection surface on which the projection light is projected, there is little reflection of light on the projection surface on which the projection light is projected, and the image display means 1c may emit the scattering light from the back surface thereof. The image displayed out on the image display means 1c is magnified by the refraction means 1a and can be seen from the viewpoint 3 side.

As shown in FIG. 9A, the image display means 1c may be provided so as to cover the half-face of the refraction means 1a made of a transparent material. Incidentally, FIG. 9A is a schematic diagram showing a cross section in a case where the image display means 1c is formed hemi-spherically on the surface of the transparent ball lens 10. The round column lens may be a cross section in the case that an image display means having a half cylindrical surface shape is provided.

The line connecting the center part of the hemispherical image display means 1c and the central part of the ball lens 10 is a vertical direction with respect to the convex shaped surface of the arrangement support means 1b. In addition, in case of round column lens, the line connecting the center line of the round column lens and the center line of the hemispherical image display means 1c is a vertical direction with respect to the convex shaped surface of the arrangement support means 1b.

As shown in FIG. 9B, projection light is projected from the image projection means 1d onto the surface of the ball lens 10 provided with hemispherical image display means 1c, and the formed-image 5 is formed. Incidentally, when the formed-image 5 formed on the surface of the ball lens 10 is viewed from the side where the formed-image 5 is formed, the formed-image 5 is a mirror image.

In addition, the center part of the formed-image is not necessarily the center of the image "E" itself. After the ball lenses 10 are fixed to the ball lenses 10 by the arrangement support means 1b, the center part of the image is the position where the normal line of the convex surface formed by the arrangement support means 1b passes through the center part of the ball lens 10 and intersects with the surface of the ball lens 10 on the opposite side to the viewing point 3 side.

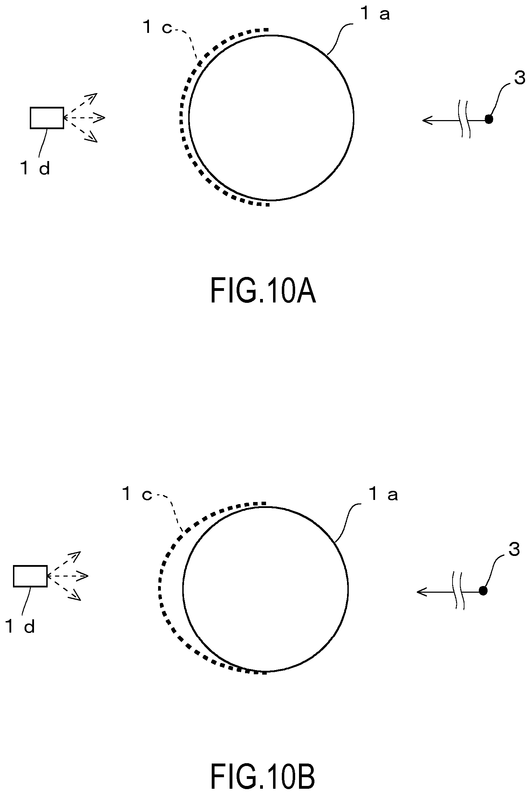

Fig. 10A to 12B and 14 show alternatives for the position of the display means not part of the claims.

As shown in FIG. 10A, the image display means 1c may be provided so as not to be in close contact with the refraction means 1a but with a gap with the refraction means 1a. As shown in FIG. 10B, the image display means 1c may not have a shape along the shape of the surface of the refraction means 1a. In the case where the cross-sectional shape of the refraction means 1a is a circular shape, the sectional shape of the image display means 1c is not limited to a circular shape and may be an elliptical shape. The projection light is projected from the image projection means 1d onto the projection surface of the image display means 1c, and then an image is displayed out on the back side of the projection surface of the image projection means 1c. Then the displayed-out image may be seen from the viewpoint 3 side through the refraction means 1a. In the case that there is a gap, the image displayed out on the back surface of the image display means 1c falls on the surface of the refraction means 1a, and a formed-image is formed on the surface of the refraction means 1a.

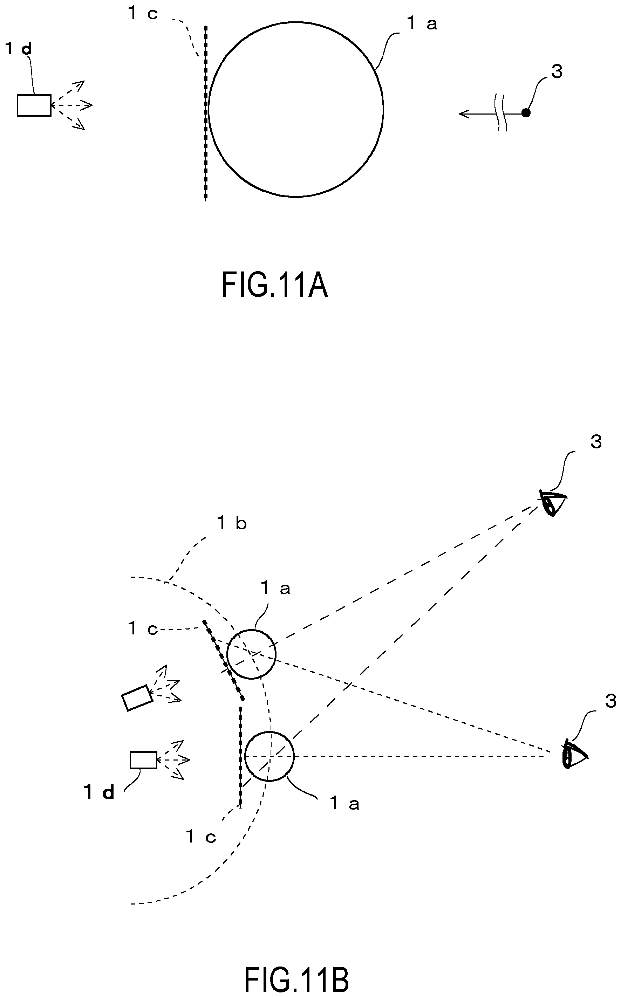

As shown in FIG. 11A, the shape of the image display means 1c may be a flat surface. As shown in FIG. 11B, by enlarging the flat image display means 1c to be larger than the size of the cross-sectional shape of the refraction means 1a, the viewing angle at which the formed-image (or an image displayed out on the back surface of the flat image display means 1c) can be seen is widened.

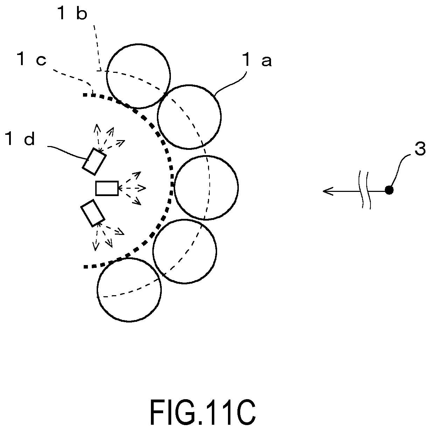

As shown in FIG. 11C, the image display means 1c may be formed integrally on the opposite side to the viewpoint 3 side with respect to each refraction means 1a. For example, in the case that each refraction means 1a is arranged in a spherical surface shape, the image display means 1c has a spherical surface shape, and in the case that each refraction means 1a is arranged in a cylindrical shape, the image display means 1c has a cylindrical shape.

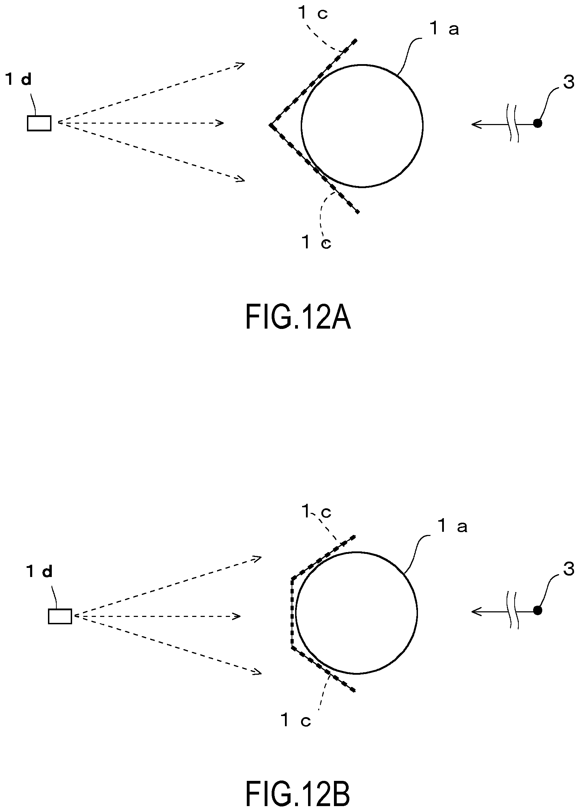

As shown in FIGS. 12A and 12B, the image display means 1c may be composed of a plurality of planes.

As shown in FIGS. 4A to 4D, the image display means 1c is provided on the surface of the refraction means 1a on the opposite side to the viewing point 3. As shown in FIG. 4E, the image display means 1c may be provided on the lens surface of the convex structure of the refraction means 1a. As shown in FIGS. 4F and 4G, the image display means 1c may be provided on the plane of the refraction means 1a.

### (1.5 Configuration and Functions of Control Device and Image Projection Means)

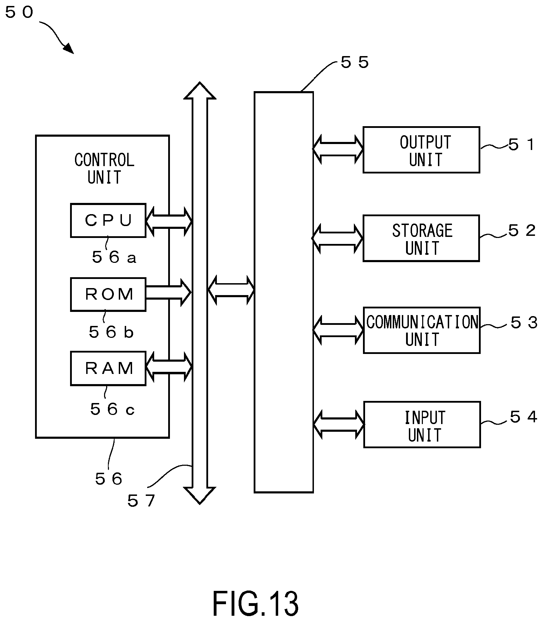

Next, the configuration and functions of the control device 50 and the image projection means 1d will be described in detail using FIGS. 13 to 14.

The control device 50 has the function of a computer. The control device 50 includes an output unit 51, a storage unit 52, a communication unit 53, an input unit 54, an input / output interface unit 55, and a control unit 56. The control unit 56 and the input/output interface unit 55 are connected electrically via a system bus 57.

The output unit 51 outputs control data of projection light or image data to the image projection unit 1d.

The storage unit 52 is composed of, for example, a hard disk drive, a solid state drive, etc. The storage unit 52 stores the original image of the display image to be displayed on the display device 1. The storage unit 52 stores the original image of the display image to be displayed on the display device 1. The original image may be one image (in the case of the same display image in the viewpoint direction) or an image for each viewpoint direction (in the case of the display image corresponding to the viewpoint direction). The original image may be a movie whose image changes according to time.

In addition, the storage unit 52 stores various programs such as an operating system, and various files. Incidentally, the original image and the various programs may be available from, for example, another server device over the network, or may be recorded in a recording medium and read via a drive device.

The communication unit 53 controls the state of communications with an external device. The control device 50 may be connected to a network such as the Internet wirelessly or by wire via the communication unit 53.

The input unit 54 is, for example, a connector for receiving a signal, etc.

The input/output interface unit 55 conducts interface processing between the output unit 51 and the memory unit 52 etc., and the control unit 56.

The control unit 56 has, for example a CPU (Central Processing Unit) 56a, a ROM (Read Only Memory) 56b, and a RAM (Random Access Memory) 56c. When the CPU 56a reads and executes various programs stored in the ROM 56b or the memory unit 52, the control unit 56 generates image data of a projection picture, or transmits control data or image data of projection light that forms the projection picture on the projection surface of the image display means 1c to the image projection means 1d.

The control device 50 may be connected from the outside of the display device 1 or may be installed inside the display device 1. The control device 50 may be a personal computer, a smartphone, a tablet terminal, etc., and may be connected to the image projection means 1d such as a projector and transmit the control data of projection light and the image data to be projected.

The image projection means 1d is a projector which projects an image on a projection surface. For example, the projector is a CRT (Cathode Ray Tube) projector, a liquid crystal projector, a DMD (Digital Mirror Device) projector, a LCOS (Liquid Crystal On Silicon) projector, a GLV (Grating Light Valve), or the like. These displays may be curved, flat, or flexible. The image projection means 1d may project the image on the projection surface by scanning the laser light.

The projector which is the image projection means 1d has a light source lamp, a transmission type or reflection type picture unit, a projection lens, an interface, etc. The interface of the projector is connected to the output unit 53 of the control device 50. The projector acquires image data from the control device 50 via the interface.

The control device 50 may control ON / OFF of the power supply of the image projection unit 1d, the projection direction, etc. Moreover, the control device 50 generates a projection image by calculating the projection lens of the image projection means 1d, the angle of projection light projected from the image projection means 1d to the image display means 1c, the shape of the image display means 1c, the surface shape of the refraction means, etc. The control device 50 may generate the image data of the projection image so that a formed-image designed to display the display image on the display device 1 is formed on the surface of the refraction means, and may control the projection light of the image projection means 1d so that the projection image is formed on the projection surface of the image display means 1c. The function of controlling the projection light of the image projection means 1d may be provided in the image projection means 1d so that the projection image is formed on the projection surface of the image display means 1c.

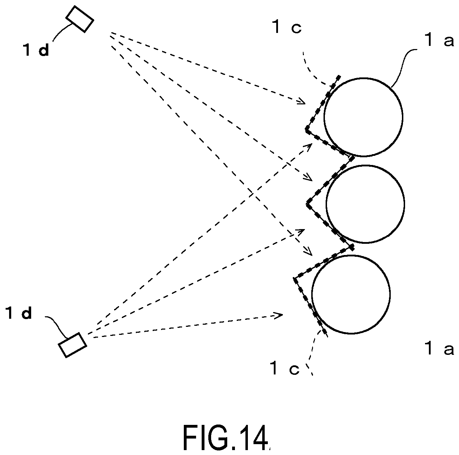

As shown in FIG. 14, the plurality of image projection means 1d may project the projection light on each surface of the image display means 1c from a plurality of directions (a predetermined part or a predetermined region of the image display means 1c). The formed-image of the corresponding surface in the refraction means 1a is formed by the projection image displayed out on each surface of the image display means 1c. Incidentally, each surface may be a predetermined part on the curved surface. Even for the image display means 1c having a hemispherical surface shape or curved surface shape, the plurality of image projection means 1d may project the projection light from a plurality of directions onto a predetermined part on the projection surface of the image display means 1c.

Herein, the same or similar images in the respective refraction means 1a may be somewhat different; it is sufficient if the image of the display device 1 can be recognized in the entire partial image of the respective refraction means 1a as viewed from the viewpoint 3.

### [2. Operation of Display Device]

Next, the operation of the display device will be described using the drawings.

### (2.1 Light Path in Refraction Means)

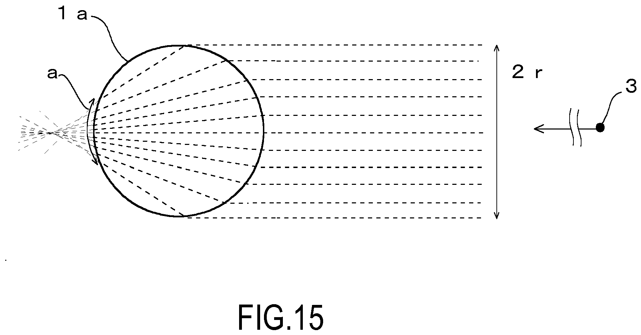

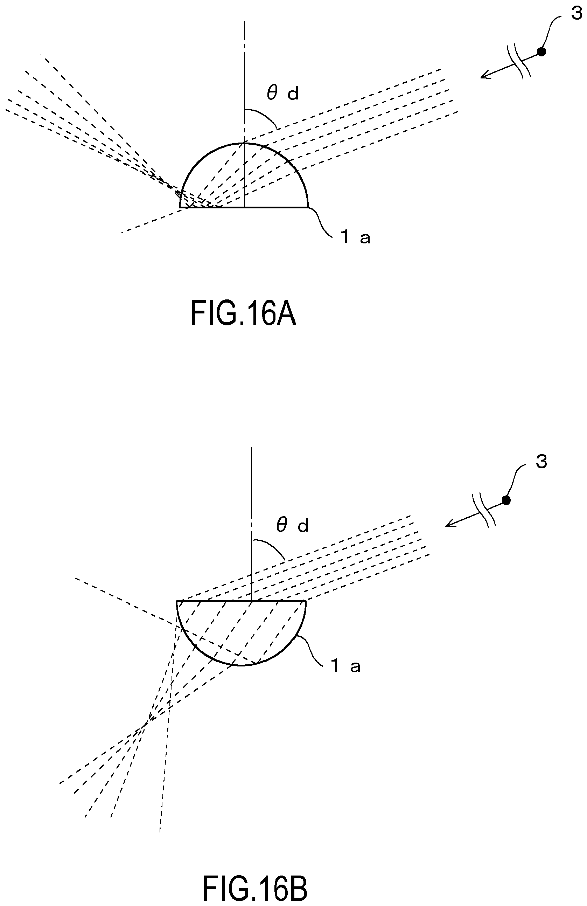

First, the light path of the refraction means will be described using FIGS. 15, 16A and 16B.

FIG. 15 is a schematic diagram showing an example of light path in the refraction means. FIG. 16A is a schematic diagram showing an example of reflection in a lens having a single convex structure.

Herein, as shown in FIG. 15, consider the case where the size of the refraction means 1a is sufficiently smaller than the distance from the viewpoint 3 to the refraction means 1a. In this case, the distance from the viewpoint 3 to the refraction means 1a can be regarded as infinity (In comparison with the distance between the refraction means 1a and the viewpoint 3, in the case that the refraction means 1a is not small, it is not a parallel light path as shown in FIG. 15, but since the effect is similar, the light path will be explained with reference to FIG. 15).

In the light path (width 2r) of the refraction means 1a having the radius r in section, the parallel light path is refracted by the refraction means 1a, reaches the circular arc portion (length a) of the refraction means 1a on the opposite side to the viewpoint 3 side, and comes out outside the refraction means 1a. Incidentally, since the cross-sectional shape of the refraction means 1a is circular shape, even if the visual direction of the viewpoint 3 is shifted, the same light path is obtained.

On the other hand, as shown in FIGS. 16A and 16B, in the case that the cross-sectional shape of the refraction means is a semicircle, as the angle θd of the viewing point 3 increases with respect to the normal direction, reflection inside the refraction means (internal reflection) occurs. That is, in the case of a lens having a single convex structure, external light can be seen from the viewpoint 3.

However, as shown in FIG. 15, if the sectional shape of the refraction means 1a is circular shape, there is no reflection inside the refraction means 1a of light incident into the refraction means 1a.

Incidentally, since the arc of the length a is expanded to the width 2r, the enlargement ratio of the refraction means 1a can be set to approximately 2r/a.

### (2.2 Appearance of Image from Viewpoint)

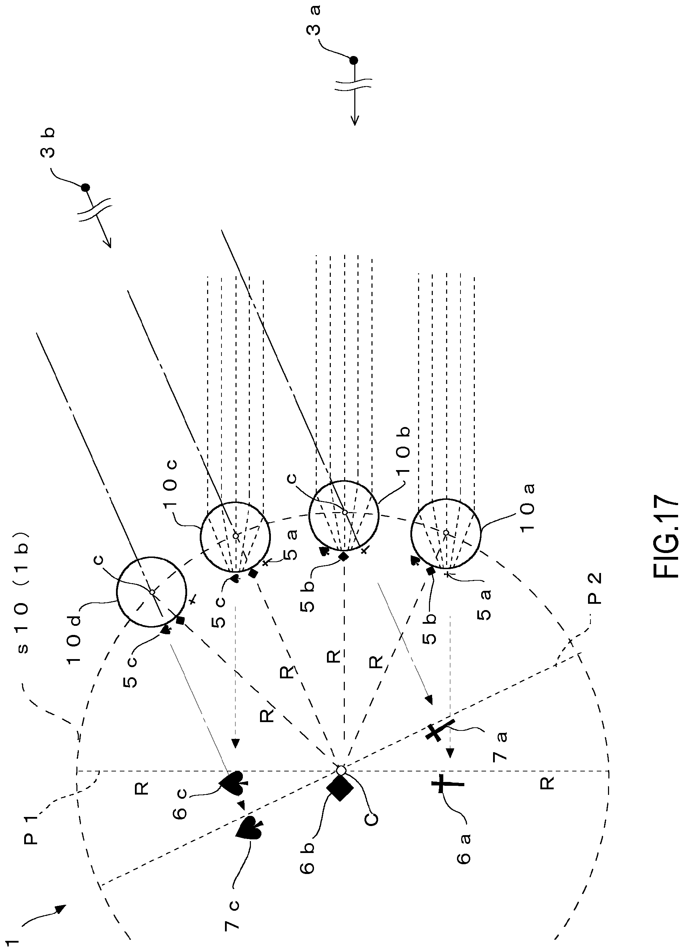

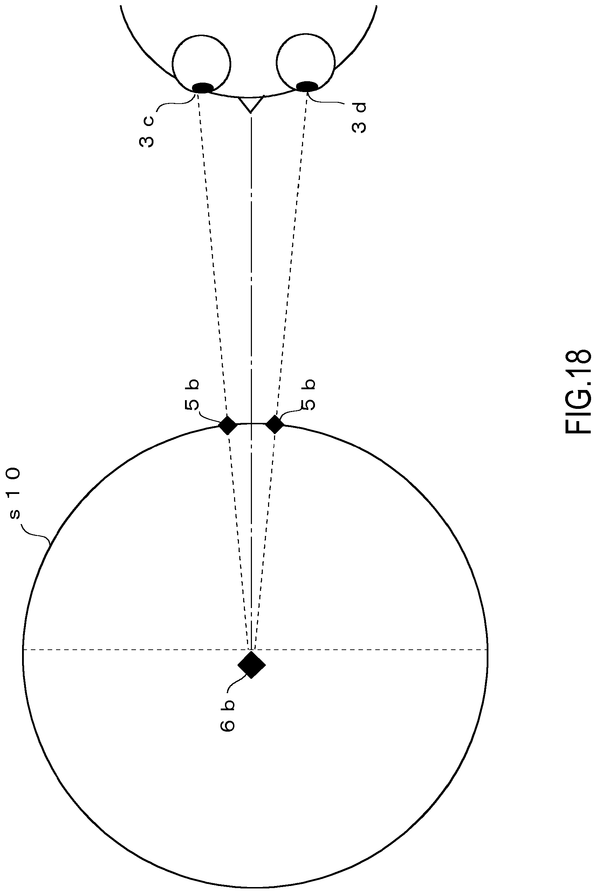

Next, appearances of the image from each viewpoint will be described using FIG. 17 and 18. FIG. FIG. 17 is a schematic diagram showing an example of relationship between viewpoint and image of each refraction means. FIG. 18 is a schematic diagram showing an example of relationship between parallax and image.

As shown in FIG. 17, it is assumed that the refraction means 10a, 10b, 10c, 10d are arranged in a circle-shape s10 (an example of a convex shape) with a radius R of the center C by the arrangement support means 1b. The distance between the center c of the refraction means 10a, 10b, 10c, 10d and the center C of the arrangement is R. Incidentally, in the case that the distance between the viewpoint and the lens is not particularly large as compared with the size of the lens or the diameter of the arrangement, the line connecting the viewpoint and each lens becomes radial.

It is assumed that partial image 5a of dagger, partial image 5b of diamond, and partial image 5c of spade are lined up in each refraction means 10a, 10b, 10c, 10d, which is a partial image of a formed-image arranged in the order of dagger, diamond, and spade which are symbols. In this example, it is assumed that the part to be the center of the formed-image is the diamond partial image 5b. Incidentally, the formed-image arranged in the order of dagger, diamond, and spade is formed by being displayed out on the projection surface of the image display means 1c by projection light projected from the image projection means 1d.

The partial image 5b of the diamond which is the center part of the formed-image is on the line connecting the center c of the refraction means and the center C of the arrangement of the refraction means. The line connecting the partial image 5 b of the diamond which is the center part of the formed-image and the center c of the refraction means is the normal direction of the circle-shape s10 (an example of a convex shape) having the radius R of the center C. That is, the direction of the partial image 5b of the diamond, which is the center part of the formed-image, is the normal direction of the circle-shape s10 (1b).

When viewing the display device 1 from the viewpoint 3a, the partial image 5a of the dagger is seen centrally in the refraction means 10a, the partial image 5b of the diamond is seen centrally in the refraction means 10b, and a partial image 5c of the spade is seen centrally in the refraction means 10c.

Due to the enlarging function of each refraction means 10a, 10b, 10c, the partial image 5a of the dagger looks like an enlarged partial image 6a from the viewpoint 3a in the refraction means 10a, the partial image 5b of the diamond looks like an enlarged partial image 6b in the refraction means 10b, and the partial image 5c of the spade looks like an enlarged partial image 6c in the refraction means 10c.

Therefore, by combining the partial image 6a of the refracting means 10a, the partial image 6a of the refraction means 10b and the partial image 6c of the refraction means 10c, the synthetic image can be displayed on the display device 1, which is an enlarged synthetic image and is a synthetic image arranged in the order of dagger, diamond, and spade which are symbols.

On the other hand, when viewing the display device 1 from the viewpoint 3b, the partial image 5a of the dagger is seen centrally in the refraction means 10b, the partial image 5b of the diamond is seen centrally in the refraction means 10c, and a partial image 5c of the spade is seen centrally in the refraction means 10d.

Due to the enlarging function of each refraction means 10b, 10c, 10d, the partial image 5a of the dagger looks like an enlarged partial image 7a from the viewpoint 3b in the refraction means 10b, the partial image 5b of the diamond looks like an enlarged partial image 6b in the refraction means 10c, and the partial image 5c of the spade looks like an enlarged partial image 7c in the refraction means 10d.

Therefore, by combining the enlarged partial image 7a of the refracting means 10b, the enlarged partial image 6b of the refraction means 10c and the enlarged partial image 7c of the refraction means 10d, the synthetic image can be displayed on the display device 1, which is an enlarged synthetic image and is a synthetic image arranged in the order of dagger, diamond, and spade which are symbols.

As described above, the synthetic image can be seen from both the viewpoint 3a and the viewpoint 3b in the same way, which is a synthetic image synthesized from the enlarged partial images of the respective refraction means and arranged in the order of dagger, diamond, and spade which are symbols.

As shown in FIG. 18, when viewing the display as shown in FIG. 17 with both eyes (viewpoint 3c and viewpoint 3d), each partial image 5b of the diamond in each refraction means near the intersection point can be seen; The respective refraction means is near the intersection point of the circle-shape s10 with the line connecting the viewpoints 3c, 3d with respect to each eye and the center C of the arrangement of the respective refraction means. Therefore, due to the parallax, the partial image 5b of the diamond appears to have the enlarged partial image 6c displayed near the center C of the arrangement of the refraction means, which is the intersection point of the sight lines of both eyes. In this way, it looks that the synthetic image arranged in the order of the dagger, the diamond, and the spade as the symbol exists in the display device 1.

Moreover, in the example of FIG. 17, when viewing the display device 1 while moving from 3a to 3b, the synthetic image appears to be present on a plane that is always perpendicular to the line connecting the view point and the center C from the plane P1 to the plane P2, which is arranged in the order of dagger, diamond, and spade which are symbol. Therefore, it looks that the synthetic image is facing forward with respect to the viewpoint while rotating as a central axis on the center C of the arrangement of the refraction means.

As described above, according to the display device 1 of the present embodiment, the projection light outputted from the image projection means 1d falls on the projection surface of the image display means 1c and a projection image is formed. By the projection image, an image is displayed out on the back surface of the projection surface of the image display means 1c. The displayed-out image can be seen through each refraction means 1a from the viewpoint 3 side. Accordingly, due to change the projection image by controlling the projection light of the image projection means 1d, it is possible to easily change the display image to be displayed on the display device 1.

It is not necessary to re-stick or reprint an image for each refraction means. In the prior art, it is difficult to display a moving image because the degree of freedom of changing the image to be displayed is low, but according to the display device 1 according to the present embodiment, it is possible to display a moving image.

By temporally changing the projection light projected onto the projection surface of the image display means 1c from the image projection means 1d and projecting a moving image on the projection surface of the image display means 1c, is it possible to easily display the moving image on the display device 1. Moreover, since the projection light is projected from the image projection means 1d onto the projection surface of the image display means 1c to display the moving image, it is not necessary to provide the wiring for each refraction means 1a, so that the wiring becomes simple.

When viewing the display device 1 with both eyes, since the refraction means 1a is arranged in a convex shape with respect to the viewpoint 3 side, the synthetic image appears to be exit in the display device 1 due to parallax. When projection light of a moving image is projected, it appears that the moving image is displayed inside the display device 1 if viewed with both eyes.

In the case where the image display means 1c is provided on the surface of the refraction means 1a on the opposite side, since the screen is provided on the surface of the refracting means, there is no need to provide another image display means 1c, the number of parts is reduced, and the cost can be reduced.

In the case where a projection image is projected onto the projection surface of the image display means 1c by projection light projected from a plurality of directions to form a formed-image on the refraction means 1a, the dead angle of projection can be reduced.

In the case of further including image projection means such as a projector, since it is not necessary to install a display such as a liquid crystal display or an organic EL display on each refraction means, the wiring becomes simple.

Since the arrangement support means 1b supports each refraction means 1a so that the center part of the formed-image faces in the normal direction of the convex shape, in the case where the same formed-image is formed in each refraction means 1a, the display device 1 can display the same image even if the viewing angle is changed. Moreover, the display device 1 can display various images according to the formed-image of each refraction means 1a.

In the case where the convex shape has a circular- shaped cross section, the distortion of the synthetic image displayed by the display device 1 is reduced. Moreover, even when the user changes the viewing angle, it is possible to see the image with less distortion.

By the way, since each lens of the lenticular lens is a single convex structure having a flat surface, when the viewing angle exceeds a predetermined value, reflection of light from the inside of the lens occurs (internal reflection) on the flat surface of the lens, so there was a problem that a sufficient viewing angle could not be secured. Furthermore, in Patent Literature 1, in order to reduce the influence of external light from the surroundings, a light shielding means such as a slit formed in a lattice pattern on a black thin plate is provided. For this reason, there is a problem that the image becomes dark due to the light shielding means, and that there is a problem that images cannot be displayed or the image is hard to see and visibility deteriorates especially outside the center part of the cylindrical shape.

However, according to the display device 1 in the case where the refraction means 1a has a circular- shaped cross section, since the refraction means 1a has a circular cross section, it is possible to prevent deterioration of visibility due to reflection of external light from the surroundings of the display device 1 inside the refraction means 1a (internal reflection), it becomes unnecessary to provide a light shielding means such as a slit for blocking external light, the image displayed by the display device 1 becomes bright, and the visibility is improved.

In this way, by improving the visibility when the refraction means 1a has a circular-shape cross section, it is possible to ensure a wide display range with high visibility for the display device 1 and the practicality of the display device 1 can be enhanced.

In addition, since the viewing angle of each refraction means 1a is expanded, it is possible to display a large image on the entire display surface of the display device 1 as seen from the viewpoint 3 side. On the other hand, with a lens having a single convex structure, since the viewing angle of each refraction means is narrow due to internal reflection, it is impossible to display a large image displayed out on the entire display surface of the display device as seen from the viewpoint 3 side.

In addition, in the case that the shape of the refraction means 1a is spherical or round column-form, it is possible to substantially eliminate internal reflection of the refraction means 1a against external light from the surroundings of the display device 1. In this case, the viewing angle of each refraction means 1a increases.

In the case where the shape of the refraction means 1a is spherical like the ball lens 10, the degree of freedom of arrangement is improved such that the spherical refraction means 1a is arranged on a spherical surface or on the surface of an ellipsoid, etc.

In the case that the shape of the refraction means 1a is a spherical shape such as the ball lens 10 and the arrangement support means 1b arranges each refraction means 1a in a spherical shape, the display device 1 can display a similar image for the movement of the viewpoint 3 from the stereoscopic direction as well as the planar movement of viewpoint 3. In the case that the shape of the refraction means 1a is a spherical shape such as the ball lens 10 and the arrangement support means 1b arranges the refraction means 1a in a cylindrical shape, it is possible to install the display device 1 on a building pillar, etc.

In the case that the shape of the refraction means 1a is round column-form like a round column lens and the arrangement support means 1b arranges each refraction means 1a in a cylindrical surface shape, it is possible to install the display device 1 on a building pillar, etc.

### [Examples]

Next, a specific example corresponding to the above-described embodiment will be described using the drawings.

### (First Example)

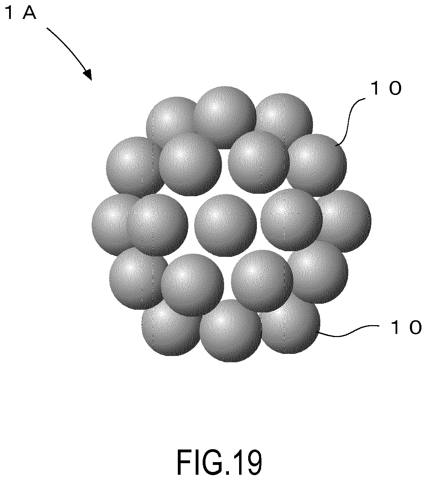

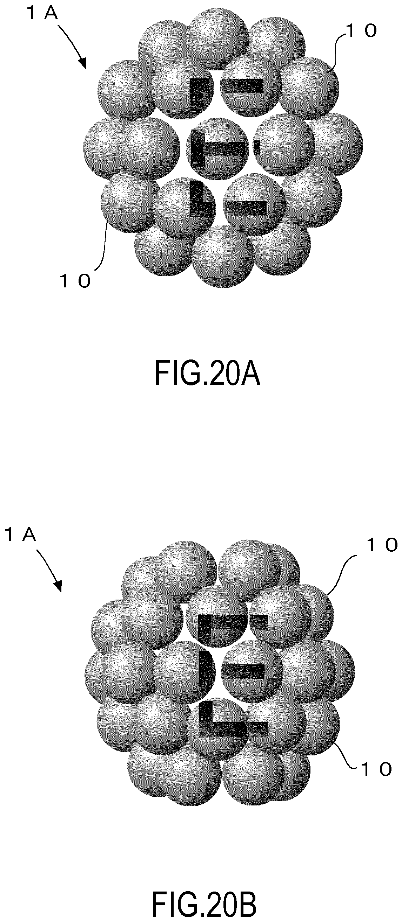

An example in the case where the refraction means 1a is the ball lens 10 will be described using FIGS. 19, 20 A and 20 B.

As shown in FIG. 19, the display device 1A is an embodiment in which a plurality of ball lenses 10 are arranged on a spherical surface.

Incidentally, although not shown in FIG. 19, an image display means 1c having a hemisphere shape is formed as a screen surface on the hemisphere surface of each ball lens 10. On each ball lens 10, as shown in FIG. 9B, a projection image of the letter "E" is displayed out on the projection surface of the image display means 1c of each ball lens 10 from the inside of the display device 1A by projection light from the image projection means 1d, the formed-image is formed on the surface of the opposite side to the viewpoint of the ball lens 10. The central part of the formed-image faces the center of the spherical surface of the display device 1A. That is, the direction from the center part of the formed-image to the center of the ball lens 10 is the normal direction of the spherical surface.

In addition, a hole for embedding each ball lens 10 is empty on the surface of the plastic having a spherical surface shape, and each ball lens 10 is embedded halfway.

As shown in FIG. 20A, the image "E" synthesized from the partial images of the ball lenses 10 serving the respective parts of the image "E" is displayed on the display device 1A.

Incidentally, in both eyes, the image "E" appears to be existed inside the display device 1A.

As shown in FIG. 20B, even if the viewpoint is shifted, the image "E" looks the same. Incidentally, as shown in FIG. 20B, the ball lens 10 serving the respective parts of the image "E" is different from the case shown in FIG. 20A.

When the image projection means 1d projects projection light forming different projection images on the projection surface of the image display means 1c by the control device 50, different images are displayed on the display device 1A. The display device 1A can easily display various images in addition to image "E".

Incidentally, the shape of the display device may be a hemispherical surface, etc.

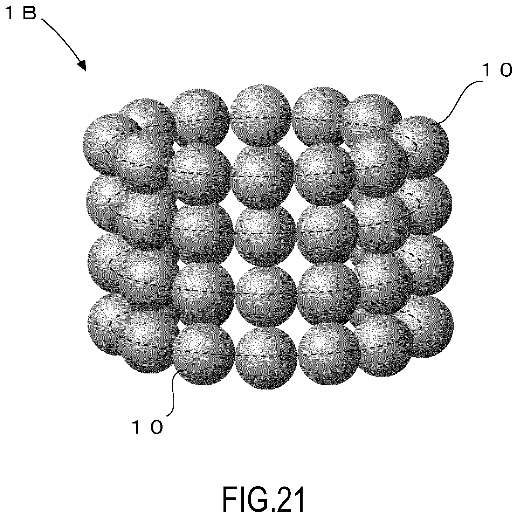

Moreover, as shown in FIG. 21, the shape of the display device may be a display device 1B having a cylindrical surface shape. In this case, the ball lens 10 is arranged in a cylindrical surface shape. Even with the sight line of a tall person, the sight line of a short person, the image can be seen.

The display device 1B may have a half cylindrical shape or a part of its shape instead of a perfect cylindrical shape.

### (Second Example)

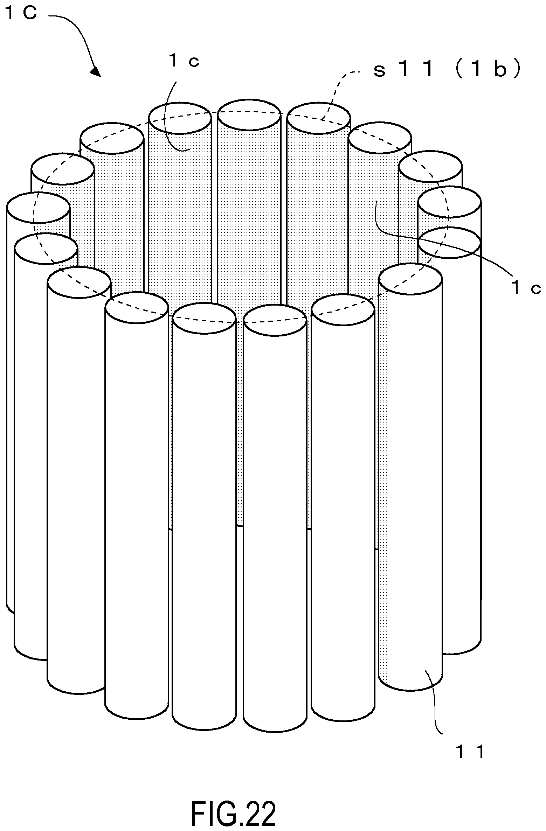

Next, an example in which a round column lens is arranged in a cylindrical surface shape will be described with reference to FIGS. 22, 23 and 24.

As shown in FIG. 22, in the display device 1C, the round column lens 11 having the same long axis direction may be arranged in a cylindrical surface shape. The cylindrical surface s11 (1b) is formed by each round column lens 11.

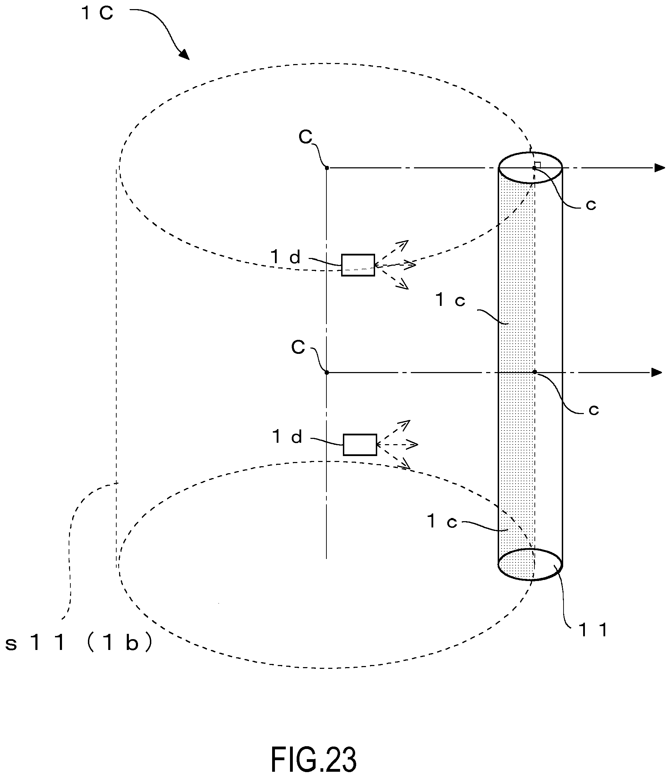

As shown in FIG. 22 and FIG. 23, on one side of the round column lens 11, an image display means 1c having a half cylindrical shape is formed as a screen surface. The image display means 1c having a half cylindrical surface shape is provided in each round column lens 11 of the display device 1C.

As shown in FIG. 23, the direction of the half cylindrical surface image display means 1c is the normal direction of the cylindrical surface s11 (1b) of the display device 1C. That is, on the line connecting the center c of the round column lens 11 and the center C of the cylindrical surface s11, there is the central part of the image display means 1c.

Herein, the arrangement support means 1b arranges the respective refraction means 1a so that the sectional shapes of the respective refraction means 1a from the viewpoint become the same shape.

Incidentally, the display device 1C may have a half cylindrical shape or a part of its shape instead of a perfect cylindrical shape.

As shown in FIG. 23, inside the display device 1C, a projector which is an example of the image projection means 1d is installed. A projection image is projected onto the projection surface of the image display means 1c by projection light from the image projection means 1d, the projection image is displayed out on the back surface of the image projection means 1c, and a formed-image is formed on the surface of opposite side to the viewpoint of the round column lens 11.

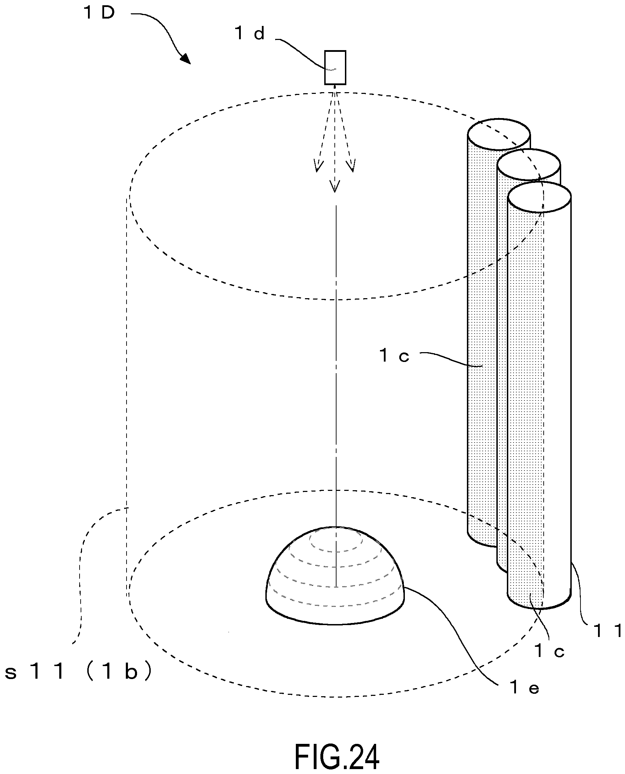

As shown in FIG. 24, the display device 1D may include reflection means 1e such as a reflecting mirror. The reflection means 1e may be a metal-polished surface, a metal-plated surface, a vapor-deposited surface, a surface to which a metal foil is attached, a surface having a light reflection effect like a mirror, or a refraction means for refracting light to an optical path similar to the light reflection effect.

The image projection means 1d may not be provided inside the display device 1D. As shown in FIG. 24, the reflection means 1e may be spherical of convex shape with respect to the image projection means 1d. The reflection means 1e may have a shape of concave surface other than the axis toward the image projection means 1d. The reflection means 1e may be a hemisphere, a cone-shape, a truncated cone, a polygonal pyramid shape such as a triangular pyramid shape, a quadrangular pyramid shape, etc., a polygonal truncated pyramid, parabola or hyperbolic, a shape obtained by combining two or more of these shapes, or a mirror-like shape at 360 degree shooting; It may be a shape that can reflect the projection light from the image projection means 1d and project the image on the projection surface of the image display means 1c.

The projecting light may be projected from a plurality of directions by the reflection means, and the image may be projected on the projection surface of the image display means 1c. Alternatively, a part of the projection light from the image display means 1c may be reflected by the reflection means (which may be plural) and projected on another projection surface of the image display means 1c from another angle.

The projection light projected from the image projection means 1d is reflected by the reflection means 1e and then projected on the image display means 1c to form the formed-image on the surface of opposite side to the viewpoint of the round column lens 11. Incidentally, the control device 50 generates the projection image in consideration of the shape of the reflecting surface of the reflection means 1e so that the formed-image in each refraction means can be formed.

Since the image projection means 1d may not be installed inside the display device 1D, the display device 1D can be reduced in size. Since the image projection means 1d may not be installed inside the display device 1D, it may not be the compact image projection means 1d. Moreover, since the image projection means 1d may not be provided from the beginning, the display device 1D can install the image projection means 1d in a later attachment, making it easy to replace.

In the case that the reflection means 1e for reflecting the projection light outputted from the image projection means 1d and projecting the reflected projection light onto the projection surface of the image display means 1c is further provided, apart from optical systems such as refractive means and image display means, since the projection system such as the image projection means etc. can be attached to the display device 1 later, these systems can be separately maintained. In addition, it is not necessary to install the image projection means such as a projector inside the display device 1 (inside the arrangement support means 1b), so that the display device 1 can be downsized. When projecting the projection light from one image display means 1c onto the reflection means 1e and projecting it from the reflection means 1e onto the respective refraction means 1a in each direction, like the projection by the plurality of image display means 1c, it is not necessary to consider the adjustment of the seam between projection images, and it is easy to generate the formed-image of the refraction means 1a.

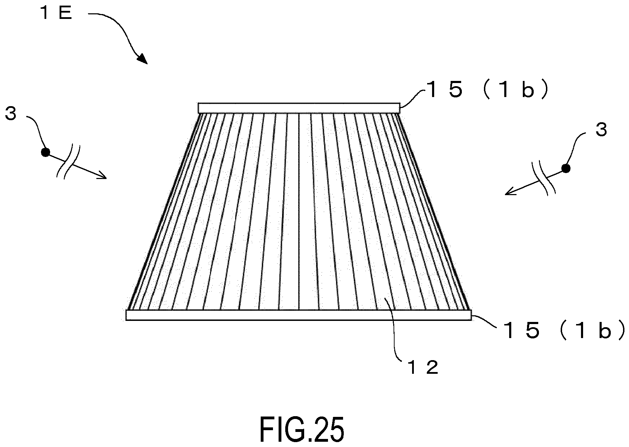

As shown in FIG. 25, the display device 1E may have a truncated conical shape. A plurality of truncated cone lens 12 are arranged on the curved surface of the side surface of the truncated cone by the support base 15 as an example of the arrangement support means 1b. As shown in FIG. 25, it can be installed at a position looking down on the display device 1E from the upper viewpoint 3. In the case of a display device in which the display device 1E as shown in FIG. 15 is turned upside down in the drawing, the display device 1E can be installed at a position to look up the display device 1E from the lower viewpoint 3.

Incidentally, the image display means 1c may be a reflection type screen instead of a transmission type screen. In this case, the small image projection means 1d is installed between the image display means 1c and the refraction means 1a. Moreover, a transmission type screen and a reflection type screen may be combined.

Projection light such that a projection image is formed directly on the refraction means 1a may be projected from the image projection means 1d or the reflection means 1e, instead of providing the image display means 1c on the entire surface of the surface of opposite side to the viewpoint of the refraction means 1a.

### REFERENCE SIGNS LIST

1, 1A, 1B, 1C, 1D, 1E: DISPLAY DEVICE
1a: REFRACTION MEANS
1b: ARRANGEMENT SUPPORT MEANS
1c: IMAGE DIPSPYAY MEANS
1d: IMAGE PROJECTION MENAS
1e: REFLECTION MEANS
3, 3a, 3b, 3c, 3d: VIEW POINT
5: FORMED-IMAGE
10: BALL LENS (REFRACTION MEANS)
12: TRUNCATED CONE LENS (REFRACTION MEANS)
15: SUPPORT BASE (ARRANGEMENT SUPPORT MEANS)
s1: CIRCULAR SHAPE (CONVEX SHAPE)
s2: ELLIPTICAL SHAPE (CONVEX SHAPE)
s3: SHAPE
s4: POLYGON (CONVEX SHAPE)
s5, s6, s7: CONVEX SHAPE
s10: CIRCLE-SHAPE (CONVEX SHAPE)
s11: CYLINDRICAL SURFACE (CONVEX SHAPE)

## Claims

1. A display device (1, 1A, 1B, 1C, 1D, 1E) comprising:
a plurality of refraction means (1a) for refracting light and magnifying an image, each refraction means (1a) comprising a portion having a circular-shaped cross-section, and the plurality of the refraction means (1a) being a plurality of lenses;
an arrangement support means (1b) for arranging the plurality of the refraction means (1a) in a circular shape, an elliptical shape, or a shape similar thereto and supporting the plurality of the refraction means (1a) in a convex shape with respect to a first side associated with a viewpoint side;
**characterized in that** it further comprises
an image display means (1c) disposed on a second side of the plurality of the refraction means (1a) opposite the first side, the image display means (1c) for displaying out an image seen from the first side, on a back surface of a projection surface onto which projection light from an image projection means (1d) is projected, the image display means (1c) being a transmission type screen, the image projection means (1d) being a projector;
wherein the image display means (1c) is disposed on a surface of the refraction means (1a) on the second side opposite the first side in a form of the transmission type screen, and
wherein a line connecting a first center of the image display means (1c) and a second center of the refraction means (1a) is in a direction normal to the convex shape of the arrangement support means (1b).

2. The display device (1, 1A, 1B, 1C, 1D, 1E) according to claim 1, wherein
the projection light from the image projection means (1d) is projected onto the projection surface of the image display means (1c) from a plurality of directions.

3. The display device (1, 1A, 1B, 1C, 1D, 1E) according to any one of claims 1 or 2, further comprising:
the image projection means (1d).

4. The display device (1, 1A, 1B, 1C, 1D, 1E) according to any one of claims 1 to 3, further comprising:
a reflection means (1e) for reflecting the projection light from the image projection means (1d) and projecting the reflected projection light onto the projection surface of the image display means (1c).

## Patentansprüche

1. Anzeigevorrichtung (1, 1A, 1B, 1C, 1D, 1E), umfassend:
eine Mehrzahl von Brechungsmitteln (1a) zum Brechen von Licht und Vergrößern eines Bildes, wobei jedes Brechungsmittel (1a) einen Abschnitt mit einem kreisförmigen Querschnitt umfasst und die Mehrzahl der Brechungsmittel (1a) eine Mehrzahl von Linsen ist;
ein Anordnungsstützmittel (1b) zum Anordnen der mehreren Brechungsmittel (1a) in einer Kreisform, einer elliptischen Form oder einer dazu ähnlichen Form und zum Halten der mehreren Brechungsmittel (1a) in einer konvexen Form bezüglich einer ersten Seite, die einer Aussichtspunktseite zugeordnet ist;
**dadurch gekennzeichnet, dass** sie ferner umfasst
ein Bildanzeigemittel (1c), das auf einer zweiten Seite der Mehrzahl von Brechungsmitteln (1a) gegenüber der ersten Seite angeordnet ist, wobei das Bildanzeigemittel (1c) zum Anzeigen eines von der ersten Seite gesehenen Bildes auf einer Rückseite einer Projektionsfläche dient, auf die Projektionslicht von einem Bildprojektionsmittel (1d) projiziert wird, wobei das Bildanzeigemittel (1c) ein Transmissionsbildschirm und das Bildprojektionsmittel (1d) ein Projektor ist;
wobei das Bildanzeigemittel (1c) auf einer Oberfläche des Brechungsmittels (1a) auf der zweiten Seite gegenüber der ersten Seite in Form eines Transmissionsbildschirms angeordnet ist, und
wobei eine Linie, die ein erstes Zentrum des Bildanzeigemittels (1c) und ein zweites Zentrum des Brechungsmittels (1a) verbindet, in einer Richtung verläuft, die normal zur konvexen Form des Anordnungsstützmittels (1b) ist.

2. Anzeigevorrichtung (1, 1A, 1B, 1C, 1D, 1E) nach Anspruch 1, wobei
das Projektionslicht vom Bildprojektionsmittel (1d) aus mehreren Richtungen auf die Projektionsfläche des Bildanzeigemittels (1c) projiziert wird.

3. Anzeigevorrichtung (1, 1A, 1B, 1C, 1D, 1E) nach einem der Ansprüche 1 oder 2, weiterhin umfassend:
das Bildprojektionsmittel (1d).

4. Anzeigevorrichtung (1, 1A, 1B, 1C, 1D, 1E) nach einem der Ansprüche 1 bis 3, weiterhin umfassend:
ein Reflexionsmittel (1e) zum Reflektieren des Projektionslichts vom Bildprojektionsmittel (1d) und zum Projizieren des reflektierten Projektionslichts auf die Projektionsfläche des Bildanzeigemittels (1c).

## Revendications

1. Dispositif d'affichage (1, 1A, 1B, 1C, 1D, 1E) comprenant : une pluralité de moyens de réfraction (1a) pour réfracter la lumière et agrandir une image, chaque moyen de réfraction (1a) comprenant une partie ayant une section transversale de forme circulaire, et la pluralité de moyens de réfraction (1a) étant une pluralité de lentilles ; un moyen de support d'agencement (1b) pour agencer la pluralité de moyens de réfraction (1a) en une forme circulaire, une forme elliptique, ou une forme similaire et supportant la pluralité de moyens de réfraction (1a) dans une forme convexe par rapport à un premier côté associé à un côté de point de vue ;
**caractérisé par le fait qu'**il comprend en outre
un moyen d'affichage d'image (1c) disposé sur un deuxième côté de la pluralité de moyens de réfraction (1a) opposé au premier côté, le moyen d'affichage d'image (1c) servant à afficher une image vue depuis le premier côté, sur une surface arrière d'une surface de projection sur laquelle la lumière de projection d'un moyen de projection d'image (1d) est projetée, le moyen d'affichage d'image (1c) étant un écran de type transmission, le moyen de projection d'image (1d) étant un projecteur ; dans lequel le moyen d'affichage d'image (1c) est disposé sur une surface du moyen de réfraction (1a) sur le second côté opposé au premier côté sous une forme de l'écran de type transmission, et
dans lequel une ligne reliant un premier centre du moyen d'affichage d'image (1c) et un second centre du moyen de réfraction (1a) est dans une direction normale à la forme convexe du moyen de support d'agencement (1b).

2. Le dispositif d'affichage (1, 1A, 1B, 1C, 1D, 1E) selon la revendication 1, dans laquelle la lumière de projection provenant du moyen de projection d'image (1d) est projetée sur la surface de projection du moyen d'affichage d'image (1c) depuis plusieurs directions.

3. Le dispositif d'affichage (1, 1A, 1B, 1C, 1D, 1E) selon l'une quelconque des revendications 1 ou 2, comprenant en outre : le moyen de projection d'image (1d).

4. Le dispositif d'affichage (1, 1A, IB, IC, ID, 1E) selon l'une quelconque des revendications 1 à 3, comprenant en outre : un moyen de réflexion (1e) pour réfléchir la lumière de projection provenant du moyen de projection d'images (1d) et projeter la lumière de projection réfléchie sur la surface de projection du moyen d'affichage d'images (1c).
